# EUROPÄISCHE PATENTANMELDUNG

(11) **EP 4 166 766 A1**
(43) Veröffentlichungstag der Anmeldung: **19.04.2023**
(21) Anmeldenummer: 21202858.3
(22) Anmeldetag: 15.10.2021
(51) Int. Cl.: F02B 25/04, F02D 15/02, F02B 75/04, F02D 19/10

(54) **LÄNGSGESPÜLTER GROSSDIESELMOTOR**

(71) Anmelder: Winterthur Gas & Diesel AG, 8401 Winterthur (CH)
(72) Erfinder: Alder, Roland, 8405 Winterthur (CH); Huber, Cyril, 8547 Gachnang (CH); Thomas Stürm,, 8505 Dettighofen (CH)
(74) Vertreter: IPS Irsch AG

(57) **Zusammenfassung**

Es wird ein Grossdieselmotor vorgeschlagen mit mindestens einem Zylinder (2), welcher einen Brennraum (4) aufweist, der durch einen Kolben (3) begrenzt wird, welcher entlang einer Zylinderachse (A) hin- und herbewegbar angeordnet ist, sowie mit einer rotierbaren Kurbelwelle (9), wobei der Kolben (3) über eine Kolbenstange (6) mit einem Kreuzkopf (7) verbunden ist, der einen Kreuzkopfzapfen (71) aufweist, wobei der Kreuzkopf (7) über eine Schubstange (8) mit der Kurbelwelle (9) verbunden ist, wobei die Kolbenstange (6) in dem Kreuzkopfzapfen (71) angeordnet ist, und wobei eine Kontrollvorrichtung (10) zum Einstellen eines Kompressionsverhältnisse vorgesehen ist, mit welcher die Kolbenstange (6) relativ zum Kreuzkopfzapfen (71) in Richtung der Zylinderachse (A) verschiebbar ist. Die Kolbenstange (6) umfasst ein unteres Teil (61) und ein oberes Teil (62), wobei das untere Teil (61) im Kreuzkopfzapfen (71) angeordnet ist, wobei das obere Teil (62) den Kolben (3) mit dem unteren Teil (61) verbindet, und wobei das untere Teil (61) und das obere Teil (62) lösbar miteinander verbunden sind.

## Beschreibung

### Längsgespülter Grossdieselmotor

Die Erfindung betrifft einen Grossdieselmotor gemäss dem Oberbegriff des unabhängigen Patentanspruchs.

Grossdieselmotoren werden klassischerweise mit Schweröl betrieben. Grossdieselmotoren, die als Zweitakt- oder als Viertakt-Maschinen ausgestaltet sein können, beispielsweise als längsgespülte Zweitakt-Grossdieselmotoren, werden häufig als Antriebsaggregate für Schiffe oder auch im stationären Betrieb, z.B. zum Antrieb grosser Generatoren zur Erzeugung elektrischer Energie eingesetzt. Dabei laufen die Motoren in der Regel über beträchtliche Zeiträume im Dauerbetrieb, was hohe Anforderungen an die Betriebssicherheit und die Verfügbarkeit stellt. Daher sind für den Betreiber insbesondere lange Wartungsintervalle, geringer Verschleiss und ein wirtschaftlicher Umgang mit den Betriebsstoffen zentrale Kriterien. Grossdieselmotoren haben typischerweise Zylinder, deren Innendurchmesser (Bohrung) mindestens 200 mm beträgt. Heutzutage werden Grossdieselmotoren mit einer Bohrung von bis zu 960 mm oder sogar noch mehr eingesetzt.

Unter den Aspekten des wirtschaftlichen und effizienten Betriebs, der Einhaltung von Abgasgrenzwerten und der Verfügbarkeit von Ressourcen sucht man heute auch bei Grossdieselmotoren nach Alternativen zu dem Brennstoff Schweröl. Dabei werden sowohl flüssige Brennstoffe eingesetzt, also Brennstoffe, die im flüssigen Zustand in den Brennraum eingebracht werden, als auch gasförmige Brennstoffe, also Brennstoffe, die im gasförmigen Zustand in den Brennraum eingebracht werden.

Beispiele für flüssige Brennstoffe als bekannte Alternativen zum Schweröl sind andere schwere Kohlenwasserstoffe, die insbesondere als Rückstände bei der Raffinerie von Erdöl übrig bleiben, Alkohole, insbesondere Methanol oder Ethanol, Benzin, Diesel, oder auch Emulsionen oder Suspensionen. So ist es z. B. bekannt, die als MSAR (Multiphase Superfine Atomised Residue) bezeichneten Emulsionen als Brennstoff zu verwenden. Eine bekannte Suspension ist diejenige aus Kohlenstaub und Wasser, die ebenfalls als Brennstoff für Grossmotoren eingesetzt wird. Als gasförmige Brennstoffe sind beispielsweise Erdgase wie LNG (liquefied natural gas), Flüssiggase wie LPG (liquefied petroleum gas) oder Ethan bekannt.

Es sind insbesondere auch solche Grossdieselmotoren bekannt, die mit mindestens zwei verschiedenen Brennstoffen betreibbar sind, wobei der Motor je nach Betriebssituation oder Umgebung entweder mit dem einen Brennstoff oder mit dem anderen Brennstoff betrieben wird.

Ein Beispiel für einen Grossdieselmotor, der mit zwei unterschiedlichen Brennstoffen betreibbar ist, ist ein Grossdieselmotor, der als Dual-Fuel Grossdieselmotor ausgestaltet ist. Dieser ist in einem Flüssigmodus betreibbar, in welchem ein flüssiger Brennstoff zur Verbrennung in den Zylinder eingebracht wird, sowie in einem Gasmodus, in welchem ein Gas als Brennstoff in den Zylinder eingebracht wird.

Grossdieselmotoren, die mit mindestens zwei oder auch mehr verschiedenen flüssigen oder gasförmigen Brennstoffen betrieben werden können, werden häufig, je nach aktuell verwendetem Brennstoff in unterschiedlichen Betriebsmodi betrieben. In dem häufig als Dieselbetrieb bezeichneten Betriebsmodus erfolgt die Verbrennung des Brennstoffs in der Regel nach dem Prinzip der Kompressionszündung oder Selbstzündung des Brennstoffs. In dem häufig als Ottobetrieb bezeichneten Modus erfolgt die Verbrennung durch die Fremdzündung eines zündfähigen vorgemischten Luft-Brennstoff-Gemisches. Diese Fremdzündung kann beispielsweise durch einen elektrischen Funken erfolgen, z. B. mit einer Zündkerze, oder auch durch die Selbstzündung einer kleinen eingespritzten Brennstoffmenge, welche dann die Fremdzündung eines anderen Brennstoffs bewirkt. Häufig wird dabei die für die Selbstzündung vorgesehene kleine Brennstoffmenge in eine mit dem Brennraum verbundene Vorkammer eingespritzt.

Ferner sind auch Mischformen aus dem Ottobetrieb und dem Dieselbetrieb bekannt.

Im Rahmen dieser Anmeldung sind mit dem Begriff "Grossdieselmotor" solche Motoren gemeint, die zumindest in einem Dieselbetrieb betrieben werden können. Insbesondere umfasst der Begriff "Grossdieselmotor" also auch solche Dual-Fuel Grossmotoren, die ausser im Dieselbetrieb auch noch in einem anderen Betrieb, beispielsweise dem Otto-Betrieb, betreibbar sind.

Im Rahmen dieser Anmeldung ist mit dem Begriff "Gasmodus" bzw. "Betrieb im Gasmodus" gemeint, dass nur das Gas bzw. der gasförmiger Brennstoff für die drehmomenterzeugende Verbrennung als Brennstoff genutzt wird. Zwar ist es, wie bereits erwähnt, möglich und durchaus auch üblich, dass im Gasmodus für die Fremdzündung des vorgemischten Luft-Brennstoff-Gemisches eine geringe Menge eines selbstzündenden flüssigen Brennstoffs, z. B. Schweröl, eingespritzt wird, um die Fremdzündung auszuführen, aber dennoch wird der Verbrennungsprozess, welcher das Drehmoment erzeugt, vollständig mit dem Gas bzw. mit dem gasförmigen Brennstoff betrieben.

Dieser Vorgang der Fremdzündung durch Selbstzündung einer geringen Menge eines flüssigen Brennstoffs wird manchmal auch als Piloteinspritzung bezeichnet. Diese Piloteinspritzung hat nichts zu tun mit der Einspritzung des flüssigen Brennstoffs in den Brennraum, wenn der Grossmotor im Flüssigmodus betrieben wird. Für die Piloteinspritzung wird üblicherweise eine andere Einspritzvorrichtung genutzt als für das Einspritzen des flüssigen Brennstoffs im Flüssigmodus. Häufig wird zudem bei der Piloteinspritzung die geringe Menge des flüssigen Brennstoffs auch nicht direkt in den Brennraum eingespritzt, sondern in mindestens eine Vorkammer, die über einen Kanal mit dem Brennraum verbunden ist.

Auch ist es bekannt, einen solchen Dual-Fuel Grossdieselmotor im Gasmodus mit einem Niederdruckverfahren zu betreiben, d.h. das Gas wird im gasförmigen Zustand in den Zylinder eingebracht, wobei der Einspritzdruck des Gases höchstens 50 bar vorzugsweise höchstens 20 bar beträgt. Dazu ist in der Zylinderwandung mindestens eine Gaseinlassöffnung vorgesehen, durch welche im Gasmodus das Gas in den Zylinder eingebracht wird. In der Praxis sind häufig zwei Gaseinlassöffnungen vorgesehen, die sich bezüglich der Zylinderachse diametral gegenüberliegen. Die Gaseinlassöffnung(en) sind dabei auf einer solchen Höhe zwischen dem unteren Umkehrpunkt und dem oberen Umkehrpunkt der Kolbenbewegung angeordnet, dass das Gas bei der Aufwärtsbewegung des Kolbens in den Zylinder eingebracht werden kann, solange noch keine oder zumindest keine wesentliche Kompression im Zylinder erfolgt ist.

Üblicherweise werden Grossdieselmotoren so ausgelegt, dass das Verdichtungsverhältnis bzw. das Kompressionsverhältnis am 100% Lastpunkt, also bei Volllast optimiert ist und der Grossdieselmotor dort einen möglichst guten Kompromiss zwischen dem Verbrennungsverhalten und dem Wirkungsgrad aufweist, das heisst, die Grossdieselmotoren sind so ausgelegt, dass sie am 100% Lastpunkt, also bei Volllast und maximaler Geschwindigkeit den höchst möglichen thermodynamischen Wirkungsgrad haben.

Das Kompressionsverhältnis ist eine geometrische Grösse, welche das Verhältnis eines ersten Volumens des Brennraumes vor dem Verdichten des Luft-Brennstoffgemisches zu einem verbliebenen zweiten Volumen des Brennraumes nach dem Verdichten des Luft-Brennstoffgemisches ist.

Die Optimierung des Brennverhaltens am 100% Lastpunkt hat zur Folge, dass in tieferen Lastbereichen, also beispielsweise bei einem tieferen Mitteldruck, der Wirkungsgrad des Grossdieselmotors nicht mehr optimal ist.

Ferner ist es bei Grossdieselmotoren, die mit mindestens zwei unterschiedlichen Brennstoffen betrieben werden -also beispielsweise Dual-Fuel Grossdieselmotoren- wünschenswert, für jeden der unterschiedlichen Brennstoffe einen möglichst hohen Wirkungsgrad zu erzielen.

Aus diesen Gründen sind Grossdieselmotoren bekannt, bei denen das Kompressionsverhältnis verändert werden kann, um dadurch den Wirkungsgrad für die jeweilige Last und/oder für den jeweiligen Brennstoff zu optimieren. Derartige Ausgestaltungen werden auch als VCR-System bezeichnet (VCR: Variable Compression Ratio)

Für einen Grossdieselmotor mit Kreuzkopfantrieb ist es beispielsweise aus der EP-A-2 687 707 zur Änderung des Kompressionsverhältnisses bekannt, dass die Kolbenstange, welche im Kreuzkopfzapfen des Kreuzkopfes gelagert ist, relativ zum Kreuzkopfzapfen in Richtung der Zylinderachse verschiebbar ist. Auf diese Weise kann das Kompressionsverhältnis verändert werden. Wird beispielsweise die Kolbenstange relativ zum Kreuzkopfzapfen in Richtung des Brennraums verschoben, so resultiert hieraus ein kleineres Volumen des Brennraums bei maximaler Kompression, und somit ein grösseres Kompressionsverhältnis.

Ausgehend von diesem Stand der Technik ist es eine Aufgabe der Erfindung, einen Grossdieselmotor mit Kreuzkopfantrieb vorzuschlagen, bei welchem das Kompressionsverhältnis in einfacher Weise verändert werden kann, wobei eine besonders gute und wirtschaftliche Ausgestaltung zur Änderung des Kompressionsverhältnisses vorgesehen ist.

Der diese Aufgabe lösenden Gegenstand der Erfindung ist durch die Merkmale des unabhängigen Patentanspruchs gekennzeichnet. Erfindungsgemäss wird ein Grossdieselmotor vorgeschlagen, mit mindestens einem Zylinder, welcher einen Brennraum aufweist, der durch einen Kolben begrenzt wird, welcher entlang einer Zylinderachse hin- und herbewegbar angeordnet ist, sowie mit einer rotierbaren Kurbelwelle, wobei der Kolben über eine Kolbenstange mit einem Kreuzkopf verbunden ist, der einen Kreuzkopfzapfen aufweist, wobei der Kreuzkopf über eine Schubstange mit der Kurbelwelle verbunden ist, wobei die Kolbenstange in dem Kreuzkopfzapfen angeordnet ist, und wobei eine Kontrollvorrichtung zum Einstellen eines Kompressionsverhältnisse vorgesehen ist, mit welcher die Kolbenstange relativ zum Kreuzkopfzapfen in Richtung der Zylinderachse verschiebbar ist. Die Kolbenstange umfasst ein unteres Teil und ein oberes Teil, wobei das untere Teil im Kreuzkopfzapfen angeordnet ist, wobei das obere Teil den Kolben mit dem unteren Teil verbindet, und wobei das untere Teil und das obere Teil lösbar miteinander verbunden sind.

Diese Ausgestaltung der Kolbenstange mit einem unteren Teil und mit einem oberen Teil stellt eine besonders vorteilhafte und wirtschaftliche Ausführungsform dar, mit welcher das Kompressionsverhältnis im Zylinder veränderbar ist.

So kann beispielsweise das untere Teil der Kolbenstange, welches in dem Kreuzkopfzapfen angeordnet ist und im Betrieb sehr hohen Belastungen ausgesetzt ist, aus einem höherwertigen Material und/oder mit einer höheren Präzision gefertigt werden, als das obere Teil der Kolbenstange, welches aus einem kostengünstigeren Material und/oder mit geringeren Anforderungen an die Präzision gefertigt werden kann.

Die Ausgestaltung hat auch im Hinblick auf Instandhaltungs- oder Servicearbeiten Vorteile. Sollen beispielsweise im Rahmen von Wartungsarbeiten der Kolben und die Kolbenstange aus dem Zylinder entfernt werden, so kann bei der erfindungsgemässen Ausgestaltung das untere Teil der Kolbenstange im Kreuzkopfzapfen verbleiben, während der Kolben zusammen mit dem oberen teil der Kolbenstange aus dem Zylinder herausgezogen wird. Somit ist das untere Teil, das im Kreuzkopf verbleibt wesentlich besser geschützt.

Auch im Hinblick auf die Herstellung ist die Ausgestaltung der Kolbenstange mit dem unteren und dem oberen Teil sehr vorteilhaft. Die Bearbeitung des unteren Teils ist wesentlich einfacher. So können Bohrungen im unteren Teil, die beispielsweise für das Zu- und Abführen von Kühlöl benötigt werden, das im Betriebszustand durch die Kolbenstange zum Kolben geführt wird, wesentlich einfacher, nämlich direkt von der Oberseite des unteren Teils gefertigt werden. Es ist nicht mehr notwendig, solche Fertigungen vom oberen, das heisst von dem mit dem Kolben verbundenen Ende der Kolbenstange durchzuführen.

Auch ist die gesamte Bearbeitung des unteren Teils deutlich einfacher, weil es von dem Rest der Kolbenstange getrennt hergestellt werden kann. Das untere Teil, welches in den Kreuzkopfzapfen des Kreuzkopfes eingepasst werden muss, verlangt üblicherweise eine deutlich höhere Präzision, die sich bei der getrennten Herstellung des unteren Teils wesentlich einfacher erreichen lässt. Auch andere Bearbeitungsschritte am unteren Teil, beispielsweise Schleifvorgänge, Oberflächenbehandlungen, z. B. eine Oberflächenhärtung, Oberflächenbeschichtungen, z.B. mit Chrom, mittels PVD (PVD: Physical Vapor Deposition), mittels Auftragsschweissen oder Wärmebehandlungen sind erheblich einfacher durchzuführen, weil das untere Teil getrennt vom Rest der Kolbenstange hergestellt und bearbeitet werden kann.

Vorzugsweise ist das untere Teil der Kolbenstange als hydraulischer Kolben ausgestaltet, der eine hydraulische Kammer begrenzt, die im Kreuzkopfzapfen angeordnet ist. Die Kontrollvorrichtung zum Einstellen des Kompressionsverhältnisse ist dann als eine hydraulische Vorrichtung ausgestaltet. Durch Einbringen eines Hydraulikmediums, beispielsweise eines Öls, in die hydraulische Kammer im Kreuzkopfzapfen kann die Kolbenstange über das als hydraulischer Kolben ausgestaltete untere Teil relativ zum Kreuzkopfzapfen in Richtung der Zylinderachse verschoben werden, sodass sich das minimale Volumen des Brennraums verkleinert. Durch Ablassen des Hydraulikmediums aus der hydraulischen Kammer kann die Kolbenstange relativ zum Kreuzkopfzapfen abgesenkt werden, sodass sich das minimale Volumen des Brennraums vergrössert.

Insbesondere wenn das untere Teil der Kolbenstange als hydraulischer Kolben ausgestaltet ist, stellt es einen grossen Vorteil dar, dass das untere Teil von dem oberen Teil lösbar und somit separat herstellbar ist. Die hohe Anforderung an die präzise Ausgestaltung des hydraulischen Kolbens lässt sich damit wesentlich einfacher erzielen. Auch hier ist es ein Vorteil, dass bei Wartungsarbeiten das als hydraulischer Kolben ausgestaltete untere Teil geschützt im Kreuzkopfzapfen verbleiben kann, wenn der Rest der Kolbenstange zusammen mit dem Kolben aus dem Zylinder herausgezogen wird.

Besonders bevorzugt ist das untere Teil aus einem ersten Material gefertigt, und das obere Teil ist aus einem zweiten Material gefertigt, wobei das erste Material verschieden ist von dem zweiten Material. Das erste Material ist vorzugsweise ein Material mit hoher Festigkeit, das den starken mechanischen Beanspruchungen widerstehen kann, insbesondere auch dann, wenn das untere Teil mit den Bohrungen für beispielsweise Kühlöl, Schmieröl oder andere Fluide versehen ist. Das zweite Material ist vorzugsweise ein kostengünstigeres Material, beispielsweise ein Stahl, wodurch sich die Herstellungskosten reduzieren lassen. Natürlich sind auch solche Ausgestaltungen möglich bei denen das erste Material das gleiche Material ist wie das zweite Material, d.h. das untere Teil und das obere teil der Kolbenstange bestehen aus demselben Material.

Gemäss einer bevorzugten Ausführungsform weist das untere Teil in Richtung der Zylinderachse eine erste Länge auf, und das obere Teil weist in Richtung der Zylinderachse eine zweite Länge auf, wobei die zweite Länge mindestens das Dreifache, vorzugsweise mindestens das Fünffache, der ersten Länge beträgt. Hierdurch ist es möglich, das untere Teil, das üblicherweise aus einem teureren Material besteht oder zusätzlichen Behandlungen unterzogen wird, möglichst klein zu halten, und den überwiegenden Teil der Kolbenstange kostengünstiger herzustellen.

Vorzugsweise ist die Grenze zwischen dem unteren Teil und dem oberen Teil der Kolbenstange so angeordnet, dass sich das untere Teil der Kolbenstange während des Betriebs des Grossdieselmotors immer unterhalb einer Dichtungsanordnung befindet, welche den Durchtritt der Kolbenstange in den Zylinder dichtet. Üblicherweise ist der Durchgang der Kolbenstange in den Zylinder in einem Grossdieselmotor mittels einer Stopfbuchse abgedichtet. Dann ist die Grenze zwischen dem unteren und dem oberen Teil der Kolbenstange so angeordnet, dass diese Grenze sich nicht durch die Stopfbuchse hindurch bewegt, sondern bei der Arbeitsbewegung des Kolbens immer unterhalb der Stopfbuchse bleibt.

Im Folgenden werden noch einige bevorzugte Massnahmen für die Ausgestaltung des unteren Teils und des oberen Teils der Kolbenstange genannt.

Vorzugsweise weist das untere Teil der Kolbenstange ein oberes Ende auf, welches mit einem unteren Ende des oberen Teils der Kolbenstange verbunden ist.

Gemäss einer bevorzugten Ausführungsform weist das obere Ende des unteren Teils der Kolbenstange einen grösseren Aussendurchmesser auf als das untere Ende des oberen Teils der Kolbenstange.

Bei einer anderen bevorzugten Ausführungsform weist das obere Ende des unteren Teils der Kolbenstange den gleichen Aussendurchmesser auf wie das untere Ende des oberen Teils der Kolbenstange.

Es sind auch Ausgestaltungen möglich, bei denen das obere Ende des unteren Teils der Kolbenstange einen kleineren Aussendurchmesser aufweist als das untere Ende des oberen Teils der Kolbenstange.

Ferner ist es eine bevorzugte Ausgestaltung, dass das obere Ende des unteren Teils der Kolbenstange eine Ausnehmung aufweist, welche das untere Ende des oberen Teils der Kolbenstange aufnimmt.

Dabei ist es speziell bevorzugt, dass das obere Ende des unteren Teils der Kolbenstange das untere Ende des oberen Teils vollständig umgibt.

Gemäss einer anderen bevorzugten Ausführungsform weist das untere Ende des oberen Teils der Kolbenstange eine Aufnahme auf, welche das obere Ende des unteren Teils der Kolbenstange aufnimmt.

Dabei ist es speziell bevorzugt, dass das untere Ende des oberen Teils der Kolbenstange das obere Ende des unteren Teils vollständig umgibt.

Da das untere Teil der Kolbenstange im Betriebszustand des Grossdieselmotors den stärksten mechanischen Belastungen ausgesetzt ist, umfasst die Herstellung des unteren Teils vorzugsweise eine Oberflächenhärtung.

Vorzugsweise ist der Grossdieselmotor als längsgespülter Zweitakt-Grossdieselmotor ausgestaltet.

Besonders bevorzugt ist der Grossdieselmotor als Dual-Fuel Grossdieselmotor ausgestaltet, der in einem Flüssigmodus betreibbar ist, in welchem ein flüssiger Brennstoff zur Verbrennung in den Brennraum eingebracht wird, und der ferner in einem Gasmodus betreibbar ist, in welchem ein Gas zur Verbrennung in den Brennraum eingebracht wird.

Weitere vorteilhafte Massnahmen und Ausgestaltungen der Erfindung ergeben sich aus den abhängigen Ansprüchen.

Im Folgenden wird die Erfindung anhand von Ausführungsbeispielen und anhand der Zeichnung näher erläutert. In der Zeichnung zeigen:
- Fig. 1:: eine schematische Schnittdarstellung eines Ausführungsbeispiels eines erfindungsgemässen Grossdieselmotors,
- Fig. 2:: eine schematische Schnittdarstellung einer Ausführungsform der Kolbenstange,
- Fig. 3:: wie Fig. 2, wobei jedoch das untere Teil vom oberen Teil getrennt dargestellt ist, und
- Fig. 4-9:: wie Fig. 2, jedoch für verschiedene Varianten für die Ausgestaltung der Kolbenstange.

Mit dem Begriff "Grossdieselmotor" sind solche Motoren gemeint, wie sie üblicherweise als Hauptantriebsaggregate für Schiffe oder auch im stationären Betrieb, z.B. zum Antrieb grosser Generatoren zur Erzeugung elektrischer Energie eingesetzt werden. Typischerweise haben die Zylinder eines Grossdieselmotors jeweils einen Innendurchmesser (Bohrung), der mindestens etwa 200 mm beträgt. Mit dem Begriff "längsgespült" ist gemeint, dass die Spül- oder Ladeluft im Bereich des unteren Endes in den Zylinder eingebracht wird. Die Verbrennungsrückstände, also insbesondere die Abgase, werden am oberen Ende des Zylinders ausgetragen.

Bei der folgenden Beschreibung der Erfindung wird auf einen Grossdieselmotor Bezug genommen, der als Dual-Fuel Grossdieselmotor ausgestaltet ist, also als ein Motor, der mit zwei unterschiedlichen Brennstoffen betrieben werden kann. Im Speziellen kann der Dual-Fuel Grossdieselmotor in einem Flüssigmodus betrieben werden, in welchem nur ein flüssiger Brennstoff in einen Brennraum eines Zylinders eingespritzt wird. Üblicherweise wird der flüssige Brennstoff, beispielsweise Schweröl oder ein Dieselöl, zu einem geeigneten Zeitpunkt direkt in den Brennraum eingespritzt und entzündet sich dort nach dem Diesel-Prinzip der Selbstzündung. Der Grossdieselmotor kann auch in einem Gasmodus betrieben werden, bei dem ein als Brennstoff dienendes Gas, beispielsweise ein Erdgas wie LNG (Liquefied Natural Gas) oder LPG (Liquefied Petroleum Gas) oder Ethan, in Form eines vorgemischten Luft-Brennstoff-Gemisches im Brennraum durch Fremdzündung zur Verbrennung gebracht wird.

Wie vorangehend bereits erläutert, ist der Begriff "Gasmodus" bzw. "Betrieb im Gasmodus" im Rahmen dieser Anmeldung so zu verstehen, dass der Grossdieselmotor in diesem Gasmodus nur mit Gas bzw. mit einem gasförmigen Brennstoff betrieben wird, wobei optional eine geringe Menge eines selbstzündenden Brennstoffs, z.B. Schweröl oder Dieselöl, lediglich zur Fremdzündung des Luft-Gas-Gemisches in den Brennraum oder eine Vorkammer oder mehrerer Vorkammern eingebracht wird (Piloteinspritzung).

Im Speziellen arbeitet der Grossdieselmotor im Gasmodus nach einem Niederdruckverfahren, d.h. das Gas wird im gasförmigen Zustand in den Zylinder eingebracht, wobei der Einspritzdruck, mit welchem das Gas in den Zylinder eingebracht wird, höchstens 50 bar und vorzugsweise höchstens 20bar beträgt. Das Luft-Gas-Gemisch wird im Brennraum nach dem Otto-Prinzip fremdgezündet. Diese Fremdzündung wird vorzugsweise dadurch bewirkt, dass zu einem geeigneten Moment eine kleine Menge selbstzündender flüssiger Brennstoff (z. B. Diesel- oder Schweröl) in den Brennraum oder in eine Vorkammer oder in mehrere Vorkammern eingebracht wird, der sich dann selbst entzündet und dadurch die Fremdzündung des Luft-Brennstoff-Gemisches im Brennraum verursacht.

Bei dem hier beschriebenen Ausführungsbeispiel wird auf einen Grossdieselmotor Bezug genommen, der als längsgespülter Dual-Fuel Zweitakt-Grossdieselmotor mit Kreuzkopfantrieb ausgestaltet ist. Natürlich ist die Erfindung nicht auf Dual-Fuel Grossdieselmotoren beschränkt, sondern betrifft jede Art von Grossdieselmotoren, also Grossmotoren, die zumindest in einem Dieselbetrieb betrieben werden können.

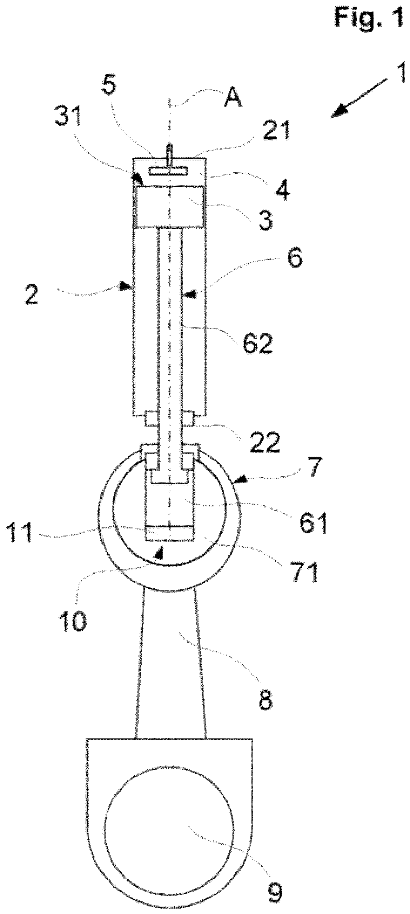

Fig. 1 zeigt in einer stark schematisierten Darstellung ein Ausführungsbeispiel eines erfindungsgemässen Grossdieselmotors der gesamthaft mit dem Bezugszeichen 1 bezeichnet ist. In Fig. 1 ist nur ein Zylinder 2 der üblicherweise mehreren Zylinder 2 des Grossdieselmotors 1 dargestellt.

Im Inneren des Zylinders 2 ist in an sich bekannter Art ein Kolben 3 angeordnet, welcher entlang einer Zylinderachse A zwischen einem unteren Umkehrpunkt und einem oberen Umkehrpunkt hin- und herbewegbar angeordnet ist. Fig. 1 zeigt den Kolben 3 im oberen Umkehrpunkt seiner periodischen Bewegung.

Der Kolben 3 hat eine Oberseite 31, welche gemeinsam mit einem Zylinderdeckel 21 einen Brennraum 4 begrenzt, in welchem der Verbrennungsprozess stattfindet.

Wie das von einem Kreuzkopfantrieb bekannt ist, ist der Koben 3 über eine Kolbenstange 6 mit einem Kreuzkopf 7 verbunden, welcher über eine Schubstange 8 mit einer Kurbelwelle 9 verbunden ist, sodass die Bewegung des Kolbens 3 über die Kolbenstange 6, den Kreuzkopf 7 und die Schubstange 8 auf die Kurbelwelle 9 übertragen wird, um diese zu drehen. Der Kreuzkopf 7 ist in an sich bekannter Weise so ausgestaltet, dass er die geradlinige Auf- und Abbewegung des Kolbens 3 und der Kolbenstange 6 in eine Rotationsbewegung der Schubstange 8 umsetzt, wobei die Schubstange 8 um einen Kreuzkopfzapfen 71 des Kreuzkopfes 7 schwenkbar gelagert ist.

Am darstellungsgemäss unteren Ende des Zylinders 2 ist eine Dichtungsanordnung 22 vorgesehen, welche den Durchtritt der Kolbenstange 6 in den Zylinder 2 dichtet. Die Dichtungsanordnung 22 umfasst vorzugsweise eine Stopfbuchse.

Der Aufbau und die einzelnen Komponenten des Grossdieselmotors 1, wie beispielsweise das Einspritzsystem für den Flüssigmodus (nicht dargestellt), das Gaszuführsystem für den Gasmodus (nicht dargestellt), das Gaswechselsystem, das Abgassystem (nicht dargestellt) oder das Turboladersystem (nicht dargestellt) für die Bereitstellung der Spül- bzw. Ladeluft, sowie das Kontroll- und Steuerungssystem (nicht dargestellt) für einen solchen Grossdieselmotor 1 sind dem Fachmann sowohl für die Ausgestaltung als Zweitaktmotor als auch für die Ausgestaltung als Viertaktmotor hinlänglich bekannt und bedürfen daher hier keiner weiteren Erläuterung.

Da es für das Verständnis der Erfindung ausreicht, ist von diesen Komponenten in Fig. 1 nur ein Auslassventil 5 dargestellt. Das Gaszuführsystem für den Gasmodus umfasst üblicherweise zwei Gaseinlassöffnungen (nicht dargestellt), durch welche im Gasmodus das als Brennstoff dienende Gas in den Zylinder 2 eingebracht wird. Die beiden Gaseinlassöffnungen sind vorzugsweise in der Wandung des Zylinders 2 angeordnet, und zwar besonders bevorzugt derart, dass sie sich diametral gegenüber liegen und bezüglich der durch die Zylinderachse A festgelegten axialen Richtung etwa in der Mitte zwischen dem oberen und dem unteren Umkehrpunkt angeordnet sind.

Das Kontroll- und Steuerungssystem ist in modernen Grossdieselmotoren ein elektronisches System, mit welchem sich üblicherweise alle Motor- oder Zylinderfunktionen, insbesondere die Einspritzung (Beginn und Ende der Einspritzung) sowohl im Gasmodus als auch im Flüssigmodus, und die Betätigung des Auslassventils 5 einstellen oder steuern bzw. regeln lassen.

Bei dem hier beschriebenen Ausführungsbeispiel eines längsgespülten Zweitakt-Grossdieselmotors sind üblicherweise im unteren Bereich eines jeden Zylinders 2 bzw. Zylinderliners Spülluftschlitze (nicht dargestellt) vorgesehen, die durch die Bewegung des Kolbens 3 im Zylinder 2 periodisch verschlossen und geöffnet werden, sodass die von einem Turbolader unter einem Ladeluftdruck in einem Einlassreceiver (nicht dargestellt) bereitgestellte Spülluft durch die Spülluftschlitze in den Zylinder 2 einströmen kann, solange diese geöffnet sind. Im Zylinderkopf bzw. im Zylinderdeckel 21 ist das meistens zentral angeordnete Auslassventil 5 vorgesehen, durch welches die Verbrennungsgase nach dem Verbrennungsprozess aus dem Zylinder 2 in das Abgassystem (nicht dargestellt) ausgetragen werden können. Das Abgassystem leitet zumindest einen Teil der Verbrennungsgase zu einer Turbine (nicht dargestellt) des Turboladers, dessen Kompressor die Ladeluft im Einlassreceiver unter dem Ladeluftdruck bereitstellt.

Für das Einbringen des flüssigen Brennstoffs in den Brennraum 4 des Zylinders 2 im Flüssigmodus sind ein oder mehrere Brennstoffeinspritzdüsen vorgesehen (nicht dargestellt), die beispielsweise im Zylinderdeckel 21 in der Nähe des Auslassventils 5 angeordnet sind. Als flüssiger Brennstoff kann im Flüssigmodus beispielsweise Schweröl oder ein Dieselöl verbrannt werden.

Für die Gaszuführung bzw. das Einbringen des Gases im Gasmodus ist ein an sich bekanntes Gaszuführsystem vorgesehen, welches die Gaseinlassöffnungen (nicht dargestellt) umfasst. Die Gaseinlassöffnungen sind vorzugsweise jeweils als Gaseinlassventil mit einer Gaseinlassdüse ausgestaltet.

Die Kolbenstange 6 ist mit ihrem darstellungsgemäss unteren Ende in dem Kreuzkopfzapfen 71 angeordnet. Ferner ist eine Kontrollvorrichtung 10 zum Einstellen eines Kompressionsverhältnisses vorgesehen. Das Kompressionsverhältnis ist eine geometrische Grösse, welche das Verhältnis eines ersten Volumens des Brennraumes 4 vor dem Verdichten der Spülluft bzw. des Luft-Brennstoffgemisches zu einem verbliebenen zweiten Volumen des Brennraumes 4 nach dem Verdichten der Spülluft bzw. des Luft-Brennstoffgemisches ist. Das erste Volumen ist das Volumen des Brennraums 4 unmittelbar nach dem Schliessen des Auslassventils 5, also zu dem Zeitpunkt, wenn bei der Aufwärtsbewegung des Kolbens 3 die Kompression beginnt. Das zweite Volumen ist das Volumen des Brennraums 4 bei maximaler Kompression der Spülluft bzw. des Luft-Brennstoffgemisches. Dies ist im Wesentlichen das Volumen des Brennraums 4 beim Beginn des Verbrennungsprozesses.

Kontrollvorrichtungen 10 zum Ändern des Kompressionsverhältnisses sind aus dem Stand der Technik bekannt, beispielsweise aus der bereits erwähnten EP-A-2 687 707 und benötigen daher hier keine nähere Erläuterung.

Bei dem erfindungsgemässen Grossdieselmotor 1 ist die Kontrollvorrichtung 10 zum Einstellen des Kompressionsverhältnisses derart ausgestaltet, dass die im Kreuzkopfzapfen 71 angeordnete Kolbenstange 6 gesamthaft relativ zum Kreuzkopfzapfen 71 in Richtung der Zylinderachse A verschiebbar ist. Gemäss der Darstellung in Fig. 1 kann also die Kolbenstange 6 und damit auch der Kolben 3 relativ zum Kreuzkopfzapfen 71 nach oben oder nach unten verschoben werden. Wird die Kolbenstange 6 darstellungsgemäss nach oben verschoben, so wird dadurch das zweite Volumen, also das Volumen bei maximaler Kompression, verkleinert, wodurch sich das Kompressionsverhältnis vergrössert. Wird die Kolbenstange 6 darstellungsgemäss nach unten verschoben, so wird dadurch das zweite Volumen, also das Volumen bei maximaler Kompression, vergrössert, wodurch sich das Kompressionsverhältnis verkleinert.

Dadurch ist es möglich, das Kompressionsverhältnis für jede Last, mit welcher der Grossdieselmotor 1 betrieben wird, optimal einzustellen, sodass für jede Last ein möglichst effizienter Verbrennungsprozess stattfindet. Ferner ist es für Dual-Fuel Grossdieselmotoren zusätzlich möglich, das Kompressionsverhältnis für den jeweiligen Brennstoff jeweils optimal einzustellen. Beispielsweise kann der Grossdieselmotor 1 im Gasmodus mit einem niedrigeren Kompressionsverhältnis betrieben werden als im Flüssigmodus.

Zudem ist es möglich, das Kompressionsverhältnis auch in Abhängigkeit von anderen Betriebsbedingungen oder Betriebsparametern optimal einzustellen, beispielsweise in Abhängigkeit von der Temperatur der Spülluft (Ladeluft), der Methanzahl des Gases, das im Gasmodus als Brennstoff dient, oder in Abhängigkeit von anderen Betriebsparametern.

Erfindungsgemäss umfasst die Kolbenstange ein unteres Teil 61 und ein oberes Teil 62, wobei das untere Teil 61 im Kreuzkopfzapfen 71 angeordnet ist, und das obere Teil 62 den Kolben 3 mit dem unteren Teil 61 verbindet. Das untere Teil 61 und das obere Teil 62 der Kolbenstange 6 sind lösbar miteinander verbunden, vorzugsweise mittels einer Mehrzahl von Bolzen (nicht dargestellt), welche eine Schraubverbindung zwischen dem oberen Teil 61 und dem unteren Teil 62 realisieren, sodass das obere Teil 61 und das untere Teil 62 fest, aber lösbar miteinander verbunden sind. Dazu kann jeder Bolzen jeweils in ein Gewinde eingreifen, welche im unteren Teil 61 oder im oberen Teil 62 vorgesehen ist.

Gemäss einer besonders bevorzugten Ausgestaltung ist das untere Teil 61 der Kolbenstange 6 als hydraulischer Kolben ausgestaltet, welcher eine hydraulische Kammer 11 der Kontrollvorrichtung 10 begrenzt. Die hydraulische Kammer 11 ist im Kreuzkopfzapfen 71 vorgesehen. Ferner sind nicht dargestellte Zu- und Abführleitungen mit Ventilen oder Absperrvorrichtungen vorgesehen, durch welch ein Hydraulikmedium, beispielsweise ein Öl, in die hydraulische Kammer 11 einbringbar bzw. aus der hydraulischen Kammer 11 abführbar ist.

Soll beispielsweise das Kompressionsverhältnis vergrössert werden, so wird Hydraulikmedium in die hydraulische Kammer 11 eingebracht, um den Druck in der hydraulischen Kammer 11 zu erhöhen. Durch diese Druckerhöhung in der hydraulischen Kammer 11 wirkt eine darstellungsgemäss nach oben gerichtete Kraft auf das als hydraulischer Kolben ausgestaltete untere Teil 61 der Kolbenstange 6, wodurch die Kolbenstange 6 und der mit ihr fest verbundene Kolben 3 nach oben bewegt werden.

Soll das Kompressionsverhältnis verkleinert werden, so wird Hydraulikmedium aus der hydraulischen Kammer 11 abgelassen, um den Druck in der hydraulischen Kammer 11 zu reduzieren. Durch diese Druckererniedrigung in der hydraulischen Kammer 11 bewegt sich die Kolbenstange aufgrund der Gewichtskraft darstellungsgemäss nach unten, wodurch sich das Kompressionsverhältnis verkleinert.

Auf diese Weise kann das Kompressionsverhältnis hydraulisch und stufenlos verändert beziehungsweise eingestellt werden.

Die Ausgestaltung der Kolbenstange 6 mit dem unteren Teil 61 und dem oberen Teil 62, die lösbar miteinander verbunden sind, hat insbesondere den Vorteil, dass das untere Teil 61 und das obere Teil 62 jeweils separat voneinander herstellbar sind. Dadurch ist es in einfacher Weise möglich, das untere Teil 61 aus einem ersten Material zu fertigen und das obere Teil aus einem zweiten Material, welches verschieden von dem ersten Material ist.

So kann für das untere Teil 61, welches im Betriebszustand deutlich höheren mechanischen Belastungen ausgesetzt ist als das obere Teil 62, ein hochwertiges Material mit sehr guten mechanischen Eigenschaften, wie hohe Zugfestigkeit, grosse Härte, Elastizität usw. gewählt werden, während für das weniger belastete obere Teil 62 ein kostengünstigeres Material, beispielsweise ein Stahl, gewählt werden kann.

Natürlich sind auch solche Ausgestaltungen möglich, bei denen das untere Teil 61 und das obere Teil 62 aus dem gleichen Material gefertigt sind, das heisst, das erste Material ist dann das gleiche wie das zweite Material. Auch bei solchen Ausgestaltungen ist es möglich, das untere Teil 61 mit einer höheren Präzision zu bearbeiten.

Auch ist es in einfacher Weise möglich, das untere Teil 61 zusätzlichen Behandlungsverfahren zu unterziehen, beispielsweise einer Oberflächenhärtung z. B. mittels Laser, oder einer Wärmebehandlung zur Verbesserung der mechanischen Eigenschaften. Ferner ist es möglich insbesondere das untere Teil 61 mit einer Oberflächenbeschichtung zu versehen, beispielsweise mit Chrom, oder mit einem PVD-Verfahren oder mit einem Auftragsschweissen.

Zudem ist es wesentlich einfacher möglich, das untere Teil 61 als separate Komponente mit hoher Genauigkeit zu bearbeiten, beispielsweise zu schleifen. Dies ist insbesondere auch dann ein wesentlicher Aspekt, wenn das untere Teil 1 als hydraulischer Kolben ausgestaltet ist, der ein sehr genaues Einpassen in die hydraulische Kammer 11 verlangt.

Ferner ist es wesentlich einfacher, an dem unteren Teil 61 als separates Bauteil Bohrungen oder andere Bearbeitungen vorzunehmen. Beispielsweise können in dem unteren Teil 61 in sehr einfacher Weise Bohrungen hergestellt werden, die dem Zuführen und dem Abführen von Kühlöl in das und aus dem Innere(n) der Kolbenstange 6 dienen.

Auch für Wartungsarbeiten ist die Ausgestaltung der Kolbenstange mit dem unteren Teil 61 und dem oberen Teil 62 besonders vorteilhaft. So kann nämlich zum Herausziehen des Kolbens 3 aus dem Zylinder 2 die Verbindung zwischen dem oberen Teil 62 und dem unteren Teil 61 gelöst werden. Anschliessend kann der Kolben 3 zusammen mit dem oberen Teil 62 der Kolbenstange 6 aus dem Zylinder 2 entfernt werden, während das untere Teil 61 in dem Kreuzkopfzapfen 71 verbleibt und dort geschützt ist. Dies ist insbesondere bei der Ausgestaltung des unteren Teils 61 als hydraulischer Kolben ein sehr grosser Vorteil.

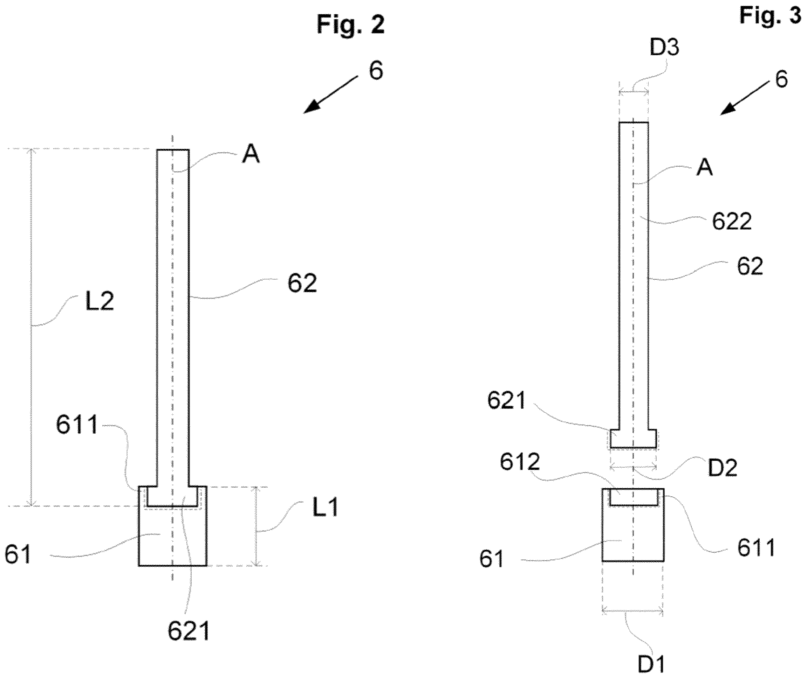

Vorzugsweise ist das untere Teil 61 der Kolbenstange 6 deutlich kürzer ausgestaltet als das obere Teil 62 der Kolbenstange 6, weil das untere Teil 61 mit dem Kreuzkopfzapfen 71 zusammenwirkt und daher üblicherweise eine höhere Präzision bei der Herstellung verlangt und/oder aus einem höherwertiges Material besteht als das obere Teil 62 der Kolbenstange 6. Das untere Teil 61 weist in Richtung der Zylinderachse A eine erste Länge L1 (Fig. 2) auf, und das obere Teil 62 weist in Richtung der Zylinderachse A eine zweite Länge L2 auf. Bevorzugt ist die zweite Länge L2 mindestens das Dreifache, vorzugsweise mindestens das Fünffache, der ersten Länge L1. Speziell bevorzugt ist das untere Teil 61 bezüglich seiner ersten Länge L1 so ausgestaltet, dass sich das untere Teil 61 der Kolbenstange 6 während des Betriebs des Grossdieselmotors immer unterhalb der Dichtungsanordnung 22 befindet, welche den Durchtritt der Kolbenstange 6 in den Zylinder 2 dichtet. Dadurch lässt es sich vermeiden, dass die Trennfläche bzw. der Trennbereich, wo das erste Teil 61 und das obere Teil 62 aneinanderstossen, durch die Dichtungsanordnung 22 hindurch oder in die Dichtungsanordnung 22 hineinläuft

Im Folgenden werden anhand der Fig. 2 bis Fig. 9 verschiedene Varianten für die Ausgestaltung der Kolbenstange 6 mit dem oberen Teil 62 und dem unteren Teil 61 erläutert.

Fig. 2 zeigt in einer schematischen Schnittdarstellung einer Ausführungsform der Kolbenstange 6, wobei es sich um die gleiche Ausgestaltung handelt, die auch in Fig. 1 dargestellt ist. Zum besseren Verständnis zeigt Fig. 3 die Ausführungsform aus Fig. 2 nochmals, wobei jedoch das untere Teil 61 vom oberen Teil 62 getrennt dargestellt ist.

Das untere Teil 61 ist im wesentlichen kreiszylinderförmig ausgestaltet und weist ein oberes Ende 611 auf, mit welchem das untere Teil 61 an das obere Teil 62 angrenzt. Das obere Teil 62 umfasst eine kreiszylindrische Stange 622 und ein unteres Ende 621, das sich an der dem unteren Teil 61 zugewandten Stirnfläche der Stange 622 an die Stange 622 anschliesst. Das obere Teil 62 grenzt mit dem unteren Ende 621 an das untere Teil 61 an.

Das untere Ende 621 des oberen Teils 62 ist ebenfalls kreiszylinderförmig ausgestaltet und weist einen Aussendurchmesser D2 auf, welcher grösser ist als der Aussendurchmesser D3 der Stange 622 des oberen Teils 62, sodass das untere Ende 621 als eine Art Fuss des oberen Teils 62 ausgestaltet ist.

Das obere Ende 611 des unteren Teils 61 der Kolbenstange 6 weist einen Aussendurchmesser D1 auf, welcher grösser ist als der Aussendurchmesser D2 des unteren Endes 621 des oberen Teils 62.

Das obere Ende 611 des unteren Teils 61 weist eine zentral angeordnete Ausnehmung 612 auf, welche so ausgestaltet ist, dass sie das untere Ende 621 des oberen Teils 62 aufnehmen kann. Vorzugsweise entspricht der Innendurchmesser der Ausnehmung 612 bis auf eine notwendige Passung, beispielsweise eine Spielpassung oder eine Übergangspassung, dem Aussendurchmesser D2 des unteren Endes 621 des oberen Teils 62. Bei dieser Ausgestaltung umschliesst also das obere Ende 611 des unteren Teils 61 das untere Ende 621 des oberen Teils 62.

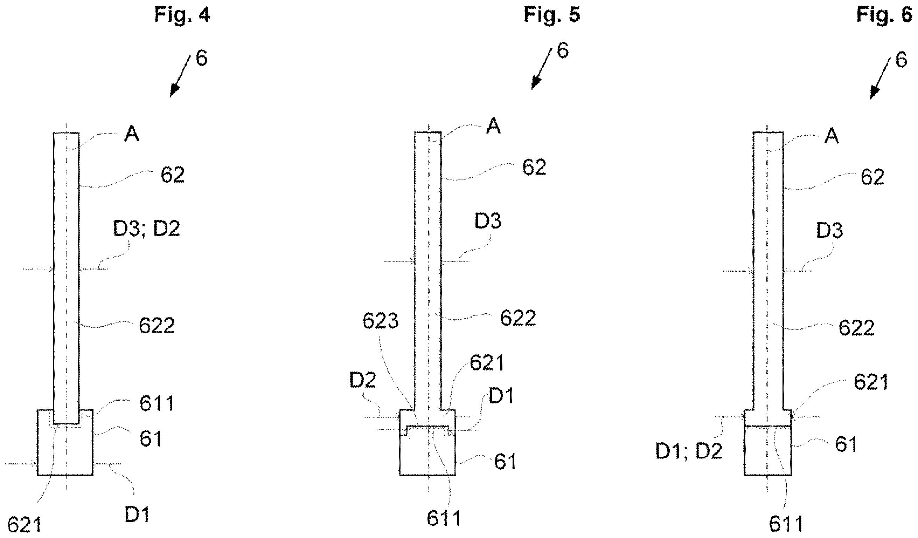

Die in Fig. 4 dargestellte Variante für die Ausgestaltung der Kolbenstange 6 entspricht grösstenteils der in Fig. 2 und Fig. 3 dargestellten Ausführungsform, jedoch ist bei der in Fig. 4 dargestellten Variante der Aussendurchmesser D2 des unteren Endes 621 des oberen Teils 62 gleich gross wie der Aussendurchmesser D3 der Stange 622 des oberen Teils 62.

Bei der in Fig. 5 dargestellten Variante weist das untere Ende 621 des oberen Teils 62 eine zentral angeordnete Aufnahme 623 auf, welche so ausgestaltet ist, dass sie das obere Ende 611 des unteren Teils 61 aufnehmen kann. Das obere Ende 611 des unteren Teils 61 weist den Aussendurchmesser D1 auf, welcher kleiner ist als der Aussendurchmesser des Rests des unteren Teils 61, derart dass das obere Ende 611 einen Vorsprung bildet. Vorzugsweise entspricht der Innendurchmesser der Aufnahme 623 bis auf eine notwendige Passung, beispielsweise eine Spielpassung oder eine Übergangspassung, dem Aussendurchmesser D1 des oberen Endes 611 des unteren Teils 61. Bei dieser Ausgestaltung umschliesst also das untere Ende 621 des oberen Teils 62 das obere Ende 611 des unteren Teils 61.

In den Fig. 6 bis Fig. 9 sind Varianten für die Ausgestaltung der Kolbenstange 6 dargestellt, bei denen die Trennfläche, an welcher das untere Teil 61 und das obere Teil 62 aneinanderstossen, jeweils eine plane Fläche ist.

Bei der in Fig. 6 dargestellten Variante ist der Aussendurchmesser D2 des unteren Endes 621 des oberen Teils 62 grösser als der Aussendurchmesser D3 der Stange 622 des oberen Teils 62 und gleich gross wie der Aussendurchmesser D1 des oberen Endes 611 des unteren Teils 61 der Kolbenstange 6.

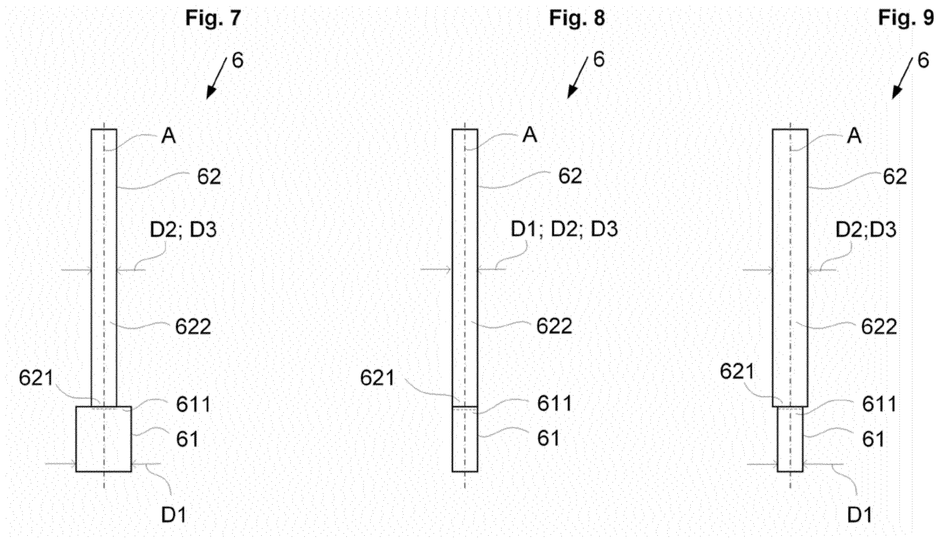

Bei der in Fig. 7 dargestellten Variante ist der Aussendurchmesser D2 des unteren Endes 621 des oberen Teils 62 gleich gross wie der Aussendurchmesser D3 der Stange 622 des oberen Teils 62 und kleiner als der Aussendurchmesser D1 des oberen Endes 611 des unteren Teils 61 der Kolbenstange 6.

Bei der in Fig. 8 dargestellten Variante ist der Aussendurchmesser D2 des unteren Endes 621 des oberen Teils 62 gleich gross wie der Aussendurchmesser D3 der Stange 622 des oberen Teils 62 und gleich gross wie der Aussendurchmesser D1 des oberen Endes 611 des unteren Teils 61 der Kolbenstange 6.

Bei der in Fig. 9 dargestellten Variante ist der Aussendurchmesser D2 des unteren Endes 621 des oberen Teils 62 gleich gross wie der Aussendurchmesser D3 der Stange 622 des oberen Teils 62 und grösser als der Aussendurchmesser D1 des oberen Endes 611 des unteren Teils 61 der Kolbenstange 6.

Es versteht sich, dass auch noch weitere Ausgestaltungen der Kolbenstange 6 mit dem oberen Teil 62 und dem unteren Teil 61 möglich sind.

## Patentansprüche

1. Grossdieselmotor mit mindestens einem Zylinder (2), welcher einen Brennraum (4) aufweist, der durch einen Kolben (3) begrenzt wird, welcher entlang einer Zylinderachse (A) hin- und herbewegbar angeordnet ist, sowie mit einer rotierbaren Kurbelwelle (9), wobei der Kolben (3) über eine Kolbenstange (6) mit einem Kreuzkopf (7) verbunden ist, der einen Kreuzkopfzapfen (71) aufweist, wobei der Kreuzkopf (7) über eine Schubstange (8) mit der Kurbelwelle (9) verbunden ist, wobei die Kolbenstange (6) in dem Kreuzkopfzapfen (71) angeordnet ist, und wobei eine Kontrollvorrichtung (10) zum Einstellen eines Kompressionsverhältnisse vorgesehen ist, mit welcher die Kolbenstange (6) relativ zum Kreuzkopfzapfen (71) in Richtung der Zylinderachse (A) verschiebbar ist, **dadurch gekennzeichnet, dass** die Kolbenstange (6) ein unteres Teil (61) und ein oberes Teil (62) umfasst, wobei das untere Teil (61) im Kreuzkopfzapfen (71) angeordnet ist, wobei das obere Teil (62) den Kolben (3) mit dem unteren Teil (61) verbindet, und wobei das untere Teil (61) und das obere Teil (62) lösbar miteinander verbunden sind.

2. Grossdieselmotor nach Anspruch 1, wobei das untere Teil (61) der Kolbenstange (6) als hydraulischer Kolben ausgestaltet ist, der eine hydraulische Kammer (11) begrenzt, die im Kreuzkopfzapfen (71) angeordnet ist.

3. Grossdieselmotor nach einem der vorangehenden Ansprüche, wobei das untere Teil (61) aus einem ersten Material gefertigt ist, wobei das obere Teil (62) aus einem zweiten Material gefertigt ist, und wobei das erste Material verschieden ist von dem zweiten Material.

4. Grossdieselmotor nach einem der vorangehenden Ansprüche, wobei das untere Teil (61) in Richtung der Zylinderachse (A) eine erste Länge (L1) aufweist, wobei das obere Teil (62) in Richtung der Zylinderachse (A) eine zweite Länge (L2) aufweist, und wobei die zweite Länge (L2) mindestens das Dreifache, vorzugsweise mindestens das Fünffache, der ersten Länge (L1) beträgt.

5. Grossdieselmotor nach einem der vorangehenden Ansprüche, **dadurch gekennzeichnet, dass** sich das untere Teil (61) der Kolbenstange (6) während des Betriebs des Grossdieselmotors immer unterhalb einer Dichtungsanordnung (22) befindet, welche den Durchtritt der Kolbenstange (6) in den Zylinder (2) dichtet.

6. Grossdieselmotor nach einem der vorangehenden Ansprüche, wobei das untere Teil (61) der Kolbenstange (6) ein oberes Ende (611) aufweist, welches mit einem unteren Ende (621) des oberen Teils (62) der Kolbenstange verbunden ist.

7. Grossdieselmotor nach Anspruch 6, wobei das obere Ende (611) des unteren Teils (61) der Kolbenstange (6) einen grösseren Aussendurchmesser (D1) aufweist als das untere Ende (621) des oberen Teils (62) der Kolbenstange (6).

8. Grossdieselmotor nach Anspruch 6, wobei das obere Ende (611) des unteren Teils (61) der Kolbenstange (6) den gleichen Aussendurchmesser (D1) aufweist wie das untere Ende (621) des oberen Teils (62) der Kolbenstange (6).

9. Grossdieselmotor nach Anspruch 6 oder 7, wobei das obere Ende (611) des unteren Teils (61) der Kolbenstange (6) eine Ausnehmung (612) aufweist, welche das untere Ende (621) des oberen Teils (62) der Kolbenstange (6) aufnimmt.

10. Grossdieselmotor nach Anspruch 9, wobei das obere Ende (611) des unteren Teils (61) der Kolbenstange (6) das untere Ende (621) des oberen Teils (62) vollständig umgibt.

11. Grossdieselmotor nach Anspruch 6 oder 7, wobei das untere Ende (621) des oberen Teils (62) der Kolbenstange (6) eine Aufnahme (623) aufweist, welche das obere Ende (611) des unteren Teils (61) der Kolbenstange (6) aufnimmt.

12. Grossdieselmotor nach Anspruch 11, wobei das untere Ende (621) des oberen Teils (62) der Kolbenstange (6) das obere Ende (611) des unteren Teils (61) vollständig umgibt.

13. Grossdieselmotor nach einem der vorangehenden Ansprüche, wobei die Herstellung des unteren Teils (61) eine Oberflächenhärtung umfasst.

14. Grossdieselmotor nach einem der vorangehenden Ansprüche, ausgestaltet als längsgespülter Zweitakt-Grossdieselmotor.

15. Grossdieselmotor nach Anspruch 14, ausgestaltet als Dual-Fuel Grossdieselmotor, der der in einem Flüssigmodus betreibbar ist, in welchem ein flüssiger Brennstoff zur Verbrennung in den Brennraum eingebracht wird, und der ferner in einem Gasmodus betreibbar ist, in welchem ein Gas zur Verbrennung in den Brennraum eingebracht wird.
